# EUROPEAN PATENT APPLICATION

(11) **EP 1 585 054 A1**
(43) Date of publication of application: **12.10.2005**
(21) Application number: 05251945.1
(22) Date of filing: 29.03.2005
(51) Int. Cl.: G06K 9/00

(54) **Biometric configuration management system**

(30) Priority: 31.03.2004 US 814524
(71) Applicant: Hewlett-Packard Development Company, L.P., Houston, TX 77070 (US)
(72) Inventor: Nicholas, Kenneth E., Tomball, TX 77377 (US)
(74) Representative: Tollett, Ian

(57) **Abstract**

A biometric configuration management system (10) comprises a biometric sensor module (16) for receiving biometric data associated with a user. The system (10) also comprises a configuration module (48) adapted to automatically select a communication network configuration setting for a device (12) based on the received biometric data.

## Description

The present invention relates to a biometric configuration management system.

Electronic devices, such as laptop and notebook computers, personal digital assistants, tablet computers, touch screen displays, desktop computers, and other types of devices, are generally configured to communicate over a variety of different types of wired and/or wireless communication networks. For example, the device may be configured to communication over a public switched telephone network (PSTN), a wide area network (WAN), a local area network (LAN), and/or a personal area network (PAN). However, identifying, selecting and/or switching to a particular communication network setting is generally difficult and requires a time-consuming series of operations by a user. Additionally, for a portable electronic device, as the device is transported to different locations, the network configuration setting of the device must also be changed to accommodate a desired and/or available type of communication network, thereby increasing the complexity of changing network configuration settings and requiring repeated setting change operations.

In accordance with one embodiment of the present invention, a biometric configuration management system comprises a biometric sensor module for receiving biometric data associated with a user. The system also comprises a configuration module adapted to automatically select a communication network configuration setting for a device based on the received biometric data.

In accordance with another embodiment of the present invention, a biometric configuration management method comprises receiving biometric data from a user and automatically selecting a communication network configuration setting for a device based on the received biometric data.

For a more complete understanding of the present invention and the advantages thereof, reference is now made to the following descriptions of a number of preferred embodiments taken in connection with the accompanying drawings in which:
FIGURE 1 is a diagram illustrating an embodiment of a biometric configuration management system in accordance with the present invention;
FIGURE 2 is a diagram illustrating an embodiment of a user interface employed by the system illustrated in FIGURE 1;
FIGURE 3 is a flow diagram illustrating an embodiment of a biometric configuration management method in accordance with the present invention; and
FIGURE 4 is a flow diagram illustrating another embodiment of a biometric configuration management method in accordance with the present invention.

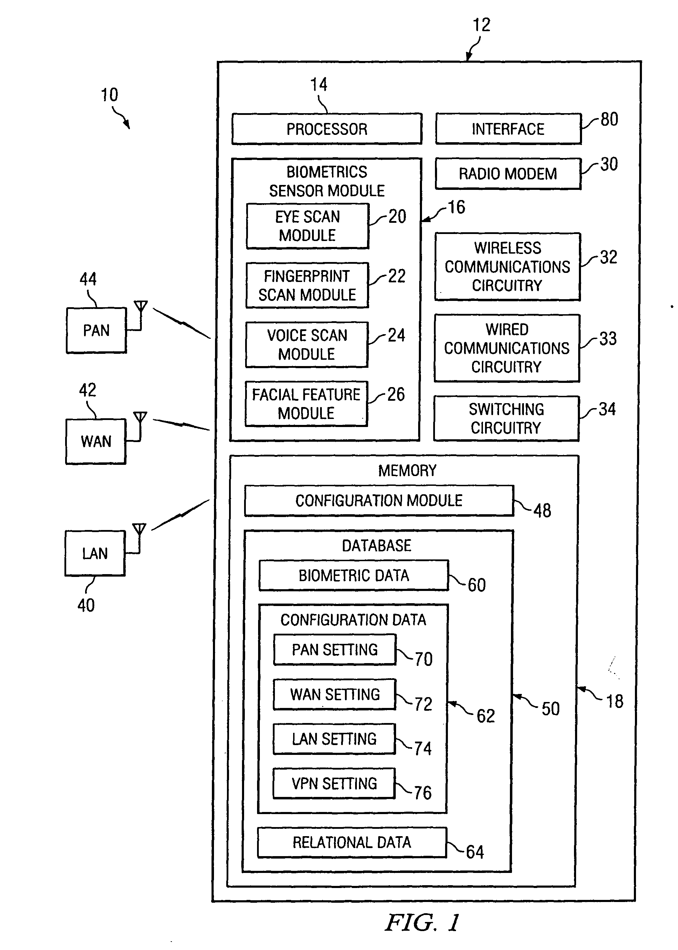

The preferred embodiments of the present invention and the advantages thereof are best understood by referring to FIGURES 1-4 of the drawings, like numerals being used for like and corresponding parts of the various drawings.

FIGURE 1 is a diagram illustrating an embodiment of a biometric configuration management system 10 in accordance with the present invention. Briefly, system 10 enables a user to automatically select, configure and/or switch to a desired wired and/or wireless communication network setting for an electronic device 12 based on a user biometric received by device 12. For example, according to some embodiments of the present invention, device 12 is configured such that different fingerprint scans or other type of biometrics are associated with different types of wired and/or wireless network configuration settings for device 12 such that, upon receipt of a particular fingerprint biometric from the user, device 12 automatically selects and/or switches to the desired corresponding communication network setting. Electronic device 12 may comprise any type of electronic device, portable or non-portable, such as, but not limited to, a laptop or notebook computer, a personal digital assistant, a tablet computer, a touch screen display, or a desktop computer.

In the embodiment illustrated in FIGURE 1, device 12 comprises a processor 14, a biometrics sensor module 16, and a memory 18. Biometrics sensor module 16 comprises hardware, software, or a combination of hardware and software, for receiving and/or analyzing various types of biometrics associated with a user of device 12. For example, in the embodiment illustrated in FIGURE 1, biometrics sensor module 16 comprises an eye scan module 20, a fingerprint scan module 22, a voice scan module 24, and a facial feature module 26. Eye scan module 20 is configured to receive and/or analyze biometric information associated with a user's eyes, such as a retinal or other type of optical scan. Fingerprint scan module 22 is configured to receive and/or analyze fingerprint biometric information associated with the user. Voice scan module 24 is configured to receive and/or analyze voice signals provided by the user of device 12. Facial feature module 26 is configured to receive and/or analyze facial expressions or gestures of the user of device 12. However, it should be understood that device 12 may be configured to receive and/or analyze other types of biometric information. Additionally, it should be understood that device 12 may be configured to receive and/or analyze a single type of biometric information or multiple types of different biometric information.

In some embodiments, device 12 is configured with a single type of biometrics sensor, such as fingerprint scan module 22, to enable a desired quantity of biometrics to be associated with a corresponding quantity of available wireless and/or wired network communication settings for device 12. For example, in some embodiments configured with fingerprint scan module 22, device 12 is configured to have as many as ten stored biometrics, each biometric associated with a different network communication setting for device 12. However, it should be understood that other types of biometric sensors may enable a greater or fewer quantity of biometrics to be stored and associated with different network communication settings for device 12. Additionally, it should be understood that device 12 may also be configured with a plurality of different types of biometrics sensors to provide greater flexibility for storing and associating different types of biometrics with different types of communication network settings for device 12.

Further, it should be understood that either a single biometric and/or a combination of biometrics, simultaneously and/or sequentially input, may be used to associate with a particular communication network setting. For example, in some embodiments, a combination of different fingerprint scan biometrics or a combination of a fingerprint scan biometric and another type of biometric are used to associate with a particular communication network setting. In some embodiments, device 12 is configured to associate a particular communication network setting with multiple biometrics input simultaneously (e.g., fingerprint scans of two different fingers input simultaneously). In other embodiments, device 12 is configured to associate a particular communication network setting with multiple biometrics input sequentially (e.g., a fingerprint scan biometric followed by either another fingerprint scan biometric or another type of biometric). Additionally, it should be understood that device 12 may be configured such that different biometrics are associated with different communication network settings (e.g., a fingerprint scan biometric associated with a particular network setting and an eye scan biometric associated with another network setting). While various portions of the description of system 10 will be directed to a fingerprint scan biometric embodiment of the present invention, it should be understood that embodiments of the present invention may be otherwise varied to encompass additional and/or alternative biometric applications.

In the embodiment illustrated in FIGURE 1, device 12 also comprises a cellular or radio modem 30, wireless communications circuitry 32, wired communications circuitry 33, and network switching circuitry 34 for communicating with different types of wired and/or wireless communication networks including, but not limited to, a local area network (LAN) 40, a wide area network (WAN) 42, and a personal area network (PAN) 44. In FIGURE 1, device 12, LAN 40, WAN 42 and PAN 44 are illustrated as being configured for wireless communications. However, it should be understood that device 12, LAN 40, WAN 42 and/or PAN 44 may also be configured for wired or non-wireless communications.

In the embodiment illustrated in FIGURE 1, system 10 also comprises a configuration module 48 having software, hardware, or a combination of software and hardware. Briefly, configuration module 48 associates user biometric information to particular wireless and/or wired communication network configuration settings for device 12 to enable automatic configuring and/or switching of device 12 for communicating via a particular wireless and/or wired communication network. For example, in some embodiments, configuration module 48 is configured to associate user fingerprint scan biometrics with different types of communication network settings such that, upon receiving a particular user fingerprint scan biometric, configuration module 48 automatically switches and/or configures device 12 for communicating via a corresponding communication network based on the associated network configuration setting.

In the embodiment illustrated in FIGURE 1, device 12 also comprises a database 50 having biometric data 60, configuration data 62, and relational data 64. Biometric data 60 comprises information associated with registered biometrics of a user of device 12. For example, biometric data 60 may comprise user biometric information acquired by biometric sensor module 16 for associating with a particular wired and/or wireless communications network. For example, in operation for some embodiments, configuration module 48 initiates a registration operation to receive, store and register user biometric information with particular wireless and/or wired communication network settings. The registered user biometrics are stored in database 50 as biometric data 60. Thus, upon subsequent receipt of a user biometric, biometrics sensor module 16 and/or configuration module 48 compares the received user biometric with biometric data 60 to identify the particular biometric received by the user.

Configuration data 62 comprises information associated with configuring device 12 for communications via particular wired and/or wireless communication networks. For example, in the embodiment illustrated in FIGURE 1, configuration data 62 comprises information associated with a PAN communication network setting 70, a WAN communication network setting 72, and a LAN communication network setting 74. However, it should be understood that configuration data 62 may comprise information associated with other or additional communication network settings. Each setting 70, 72 and 74 may comprise information associated with establishing and/or terminating a connection with a particular communication network, such as, but not limited to, information associated with connecting or searching for a cellular telephone data network. In the embodiment illustrated in FIGURE 1, configuration data 62 also comprises a virtual private network (VPN) setting 76 having information associated with establishing and/or terminating a secure link to a public network. Each setting 70, 72, 74 and 76 may comprise information associated with a single setting for a particular communication network or may comprise multiple settings for a particular communication network. For example, LAN setting 74 may comprise information associated with a single setting corresponding to LAN 40 or may comprise multiple settings for communicating via LAN 40.

Relational data 64 comprises information relating biometric data 60 to a particular wired and/or wireless network configuration setting for device 12, such as, but not limited to, settings 70, 72, or 74, such that configuration module 48 may automatically configure and/or switch device 12 to a desired type of communication network setting based on a received user biometric. For example, in operation for some embodiments, configuration module 48 initiates a registration procedure where the user is requested to input a particular type of biometric to associate with a particular type of wired and/or wireless communication network setting or, alternatively, select a particular type of wired and/or wireless communications network setting to associate with a desired biometric. Relational data 64 comprises information relating registered biometrics with corresponding communication network settings.

Thus, in operation, configuration module 48 registers settings associated with particular communication networks with particular biometrics of the user of device 12. In some embodiments, configuration module 48 is configured to display a user interface 80 for performing a biometric registration operation to relate particular user biometrics to corresponding wired and/or wireless communication network settings. In some embodiments, interface 80 is also used to display or otherwise identify to the user of device 12 a particular biometric associated with each type of wired and/or wireless communication network setting. For example, in some embodiments, interface 80 is configured to graphically highlight or otherwise identify to the user associated biometrics and network communication settings. Thus, for example, in a fingerprint scan biometric application, interface 80 is configured to highlight or otherwise indicate to the user a particular finger of the user associated with a particular communication network setting such that the user may scan the corresponding finger to configure and/or switch device 12 to the corresponding communication network setting.

Thus, in operation, based on a particular biometric received from the user of device 12, configuration module 48 compares the received biometric with biometric data 60 and accesses relational data 64 to identify and select a particular communication network setting associated with the received user biometric. Based on the received user biometric, configuration module 48 automatically configures and/or switches device 12 for the communication network setting corresponding to the received user biometric via modem 30 and/or circuitry 32,33, and/or 34. For example, in some embodiments, based on the received user biometric, configuration module 48 is adapted to automatically switch device 12 between different wireless communication network configuration settings, between different wired communication network configuration settings, from a wired to a wireless communication network configuration setting, or from a wireless communication network configuration setting to a wired communication network configuration setting.

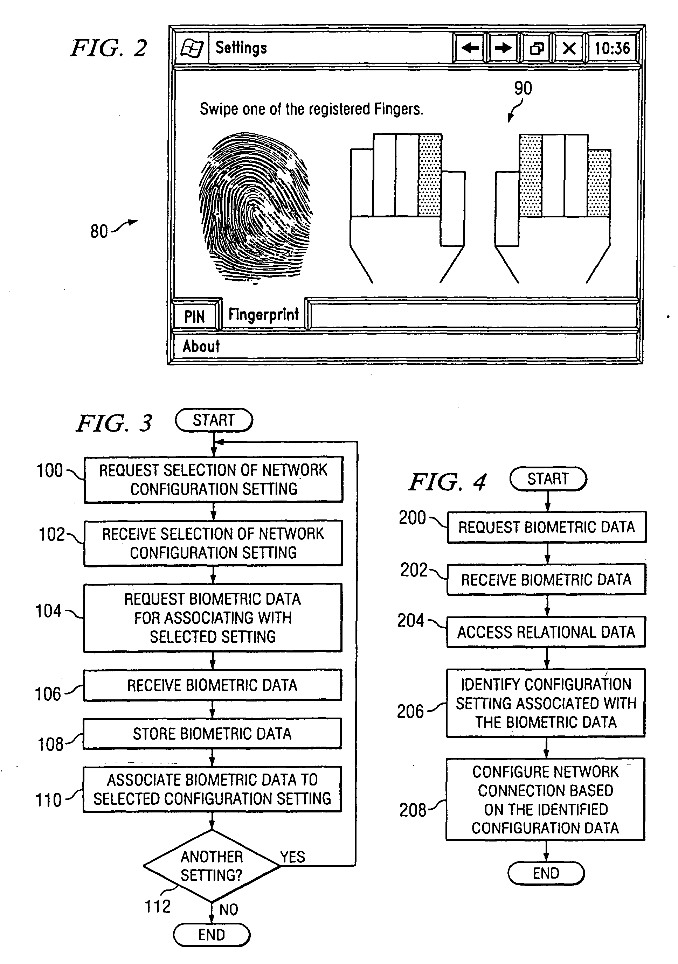

FIGURE 2 is a diagram illustrating an embodiment of interface 80 in accordance with the present invention. In the embodiment illustrated in FIGURE 2, interface 80 is configured for a fingerprint scan biometric application. However, it should be understood that interface 80 may be otherwise configured for other types of biometric applications. As illustrated in FIGURE 2, interface 80 is configured to highlight or otherwise indicate to a user of device 12 registered fingerprint scan biometrics associated with particular wired and/or wireless communication network settings, indicated generally at 90. For example, interface 80 may be configured such that the user may scroll or otherwise page through registered fingerprint biometrics to determine the particular communication network setting associated with each registered fingerprint scan biometric. The user may select or request a particular communication network setting by swiping or scanning the corresponding highlighted finger. Based on the scanned finger of the user, configuration module 48 automatically configures and/or otherwise switches device 12 for communications on a corresponding communication network based on the correlated setting.

In some embodiments, interface 80 is also configured to display available types of communication network settings for device 12 to the user to enable identification by the user of a corresponding associated biometric and/or enable registration of biometrics to the network settings. For example, in some embodiments, interface 80 is configured to enable the user to scroll or otherwise page through available types of communication configuration network settings for device 12 to enable the user to identify a particular biometric associated with a desired setting. Additionally, in some embodiments, interface 80 is configured to enable registration of biometrics with particular network configuration settings. For example, in some embodiments, interface 80, sensor module 16 and/or configuration module 48 are configured to enable a user of device 12 to identify a particular network configuration setting and input a desired biometric for associating with the particular setting, or vice versa.

FIGURE 3 is a flow diagram illustrating an embodiment of a biometric configuration management method in accordance with the present invention. The method begins at block 100, where configuration module 48 initiates a biometric registration procedure by requesting a selection of a particular network configuration setting desired by the user. At block 102, configuration module 48 receives a selection from the user of a particular network configuration setting. For example, in some embodiments, interface 80 is configured to enable the user to identify and/or otherwise select a particular wired and/or wireless communication network setting, such as, but not limited to, PAN setting 70, WAN setting 72, or LAN setting 74.

At block 104, configuration module 48 requests a biometric from the user for associating with the selected communication network setting. At block 106, configuration module 48 receives a biometric from the user via biometrics sensor module 16. At block 108, configuration module 48 stores the received user biometric as biometric data 60. At block 110, configuration module 48 associates the received biometric with the selected network configuration setting. For example, configuration module 48 stores information relating the received user biometric with the corresponding selected communication network setting as relational data 64. At decisional block 112, a determination is made whether the user desires to register another biometric with another communication network setting. If the user desires to register another biometric with another communication network setting, the method proceeds to block 100.

FIGURE 4 is a flow diagram illustrating another embodiment of a biometric configuration management method in accordance with the present invention. The method begins at block 200, where configuration module 48 requests a user biometric. At block 202, configuration module 48 receives a user biometric via biometrics sensor module 16. At block 204, configuration module 48 accesses relational data 64. At block 206, configuration module 48 identifies a particular wired and/or wireless communication network configuration setting associated with the received user biometric. At block 208, configuration module 48 automatically configures and/or switches device 12 for communications to the identified communication network configuration setting based on the received user biometric.

Thus, embodiments of the present invention enable a user of device 12 to easily and conveniently change communication network configuration settings on device 12 by inputting a particular biometric, such as a fingerprint scan of a particular finger. Embodiments of the present invention may be configured having an interface 80 to enable the user to easily identify an association of a particular biometric with a corresponding wired and/or wireless network configuration setting.

It should be understood that in the methods described in FIGURES 3 and 4, certain functions may be omitted, combined, or accomplished in a sequence different than depicted in FIGURES 3 and 4. Also, it should be understood that the methods depicted in FIGURES 3 and 4 may be altered to encompass any of the other features or aspects described elsewhere in the specification.

## Claims

1. A biometric configuration management system (10), comprising:
a biometric sensor module (16) for receiving biometric data (60) associated with a user; and
a configuration module (48) adapted to automatically select a communication network configuration setting for a device (12) based on the received biometric data (60).

2. The system (10) of Claim 1, further comprising relational data (64) accessible by the configuration module (48) for correlating the received biometric data (60) to the selected network configuration setting.

3. The system (10) of Claim 1 or 2, wherein the selected network configuration setting comprises at least one of the group consisting of a local area network (LAN) configuration setting (74), a wide area network (WAN) configuration setting (72), a personal area network (PAN) configuration setting (70) and a virtual private network (VPN) configuration setting (76).

4. The system (10) of any preceding claim, wherein the configuration module (48) is adapted to automatically switch the device (12) to the selected network configuration setting from another network configuration setting based on the received biometric data (60).

5. The system (10) of any preceding claim, wherein the configuration module (48) is adapted to compare the received biometric data to stored biometric data to select the network configuration setting.

6. The system (10) of any preceding claim, wherein the configuration module (48) is adapted to display an interface (80) to the user identifying a particular biometric associated with the network configuration setting.

7. The system (10) of any preceding claim, wherein the biometric data comprises at least one of a fingerprint scan biometric, a voice scan biometric, a facial feature biometric, and an eye scan biometric.

8. The system (10) of any preceding claim, wherein the configuration module (48) is adapted to receive a selection from the user of the network configuration setting to associate with the biometric data.

9. The system (10) of any preceding claim, wherein the configuration module (48) is adapted to display an interface (80) to the user identifying registered biometrics.

10. The system (10) of any preceding claim, wherein the configuration module (48) is adapted to request from the user a particular biometric to associate with the network configuration setting.
